# EUROPÄISCHE PATENTSCHRIFT

(11) **EP 3 864 945 B1**
(45) Veröffentlichungstag und Bekanntmachung des Hinweises auf die Patenterteilung: **08.01.2025**
(21) Anmeldenummer: 20205623.0
(22) Anmeldetag: 04.11.2020
(51) Int. Cl.: A01B 79/00, A01B 69/04, G06Q 10/06

(54) **LANDWIRTSCHAFTLICHE ARBEITSMASCHINE**
AGRICULTURAL MACHINE
MACHINE DE TRAVAIL AGRICOLE

(30) Priorität: 17.02.2020 DE 102020104064
(43) Veröffentlichungstag der Anmeldung: 18.08.2021
(73) Patentinhaber: 365FarmNet Group KGaA mbH & Co. KG, 33428 Harsewinkel (DE)
(72) Erfinder: Grundmann, Marten, 10829 Berlin (DE); Poppe-Kirchmann, Stephan, 59348 Lüdinghausen (DE)
(74) Vertreter: CLAAS Gruppe

(56) Entgegenhaltungen:
- EP-A1- 1 633 105
- EP-A1- 2 712 493
- EP-A1- 3 459 332
- US-A1- 2010 063 648
- US-A1- 2018 092 295

## Beschreibung

Die Erfindung betrifft ein Assistenzsystem zur Zuteilung von landwirtschaftlichen Maschinen.

Auf landwirtschaftlichen Betrieben werden im Laufe des Jahres eine Vielzahl an unterschiedlichen Maschinen benötigt. Allerdings werden viele Maschinen nur für einen begrenzten Zeitraum benötigt. Für die landwirtschaftlichen Betriebe ist es daher nicht wirtschaftlich alle benötigten Maschinen dauerhaft vorzuhalten.

Maschinen die nicht dauerhaft benötigt werden, werden daher zwischen den Betreibern der landwirtschaftlichen Betriebe geteilt oder zeitweise getauscht. Dies geschieht bisher auf Basis individueller Absprachen. Dabei kann es zu Unklarheiten über Eigenschaften der Maschinen, Dauer der Einsätze und Verfügbarkeiten der Maschinen kommen.

Die Maschine muss häufig für die jeweilige Aufgabe konfiguriert werden. Aus den EP1875792A1 und EP 1 633 105 A1 ist eine Methode zur Datenkonfiguration und -bereitstellung für landwirtschaftliche Arbeitsmaschinen bekannt.

Aufgabe der Erfindung ist es ein Assistenzsystem bereitzustellen, das die Zuteilung der landwirtschaftlichen Maschinen vereinfacht.

Gelöst wird die Aufgabe durch ein Assistenzsystem zur Zuteilung von landwirtschaftlichen Maschinen, wobei das Assistenzsystem eine Datenbank und eine Recheneinheit umfasst, wobei die Datenbank Maschinendaten einer Vielzahl von Maschinen und Maschinenbedarfspläne für eine Vielzahl von landwirtschaftlichen Betrieben enthält, wobei die Recheneinheit die Maschinendaten mit den Maschinenbedarfsplänen abgleicht, wobei das Assistenzsystem einer Mehrzahl von landwirtschaftlichen Betrieben jeweils zumindest eine Maschine zuordnet, sodass die Maschinendaten der zugeordneten Maschinen die Maschinenbedarfspläne der landwirtschaftlichen Betriebe erfüllen, wobei das Assistenzsystem die Maschinen temporär für vorbestimmte Zeiteinheiten den landwirtschaftlichen Betrieben zuordnet.

Die automatisierte Zuordnung der Maschinen zu den Betrieben verhindert Missverständnisse über benötigte Maschinen und vorhandene Maschinen und Überschneidungen bei Zeiteinheiten der Zuordnungen der Maschinen. Die Maschinen können in der Datenbank bspw. über eine eindeutige Kennung identifiziert werden und in den Maschinenbedarfsplänen über diese Kennung angefordert werden.

Die Nutzung von vorbestimmten Zeiteinheiten ermöglicht eine besonders einfache temporäre Zuweisung, da keine willkürlichen Zeiteinheiten beachtet werden müssen.

Die Maschinen können dabei einem der landwirtschaftlichen Betriebe gehören oder einem anderen Eigentümer, bspw. einem Lohnunternehmer oder einer Genossenschaft. Der jeweilige Eigentümer gibt die Maschinendaten zur Nutzung mit dem Assistenzsystem frei.

Bevorzugt umfassen die Maschinendaten und die Maschinenbedarfspläne Eigenschaften der Maschinen, insbesondere Art der Maschine, Arbeitsbreite der Maschine und/oder Leistungsfähigkeit der Maschine, wobei die Recheneinheit beim Abgleich der Maschinendaten mit den Maschinenbedarfsplänen die Eigenschaften der Maschinen mit den in den Maschinenbedarfsplänen geforderten Eigenschaften abgleicht.

Anstelle der direkten Anforderung einer speziellen Maschine ermöglicht die Angabe von Eigenschaften der Maschine eine indirekte Anforderung. Falls mehrere Maschinen die geforderten Eigenschaften aufweisen wählt das Assistenzsystem eine der passenden Maschinen aus. Durch die Wahlmöglichkeit wird die Zuordnung der Maschinen flexibler und die Wahrscheinlichkeit aller Maschinenbedarfspläne erfüllen zu können steigt.

Bevorzugt umfassen die Maschinen selbstfahrende Maschinen, gezogene Maschinen und/oder Anbaugeräte. Selbstfahrende Maschinen sind bspw. Traktoren, Mähdrescher oder Feldhäcksler. Gezogen Maschinen sind bspw. Ballenpressen, Sprizen oder Grubber. Anbaugeräte sind bspw. Pick-Ups oder Schneidwerke.

Bevorzugt enthalten die Maschinenbedarfspläne Bedarfszeiten der Maschinen, wobei jede Bedarfszeit zumindest eine vorbestimmte Zeiteinheit umfasst.

Da nicht jede Aufgabe zu jeder Zeit durchgeführt werden kann ist die Angabe von Bedarfszeiten besonders vorteilhaft. Das Assistenzsystem wird die benötigte Maschine für die angegebene Bedarfszeit dem landwirtschaftlichen Betrieb zuordnen. Die Bedarfszeit kann dabei absolut angegeben sein, d.h. mit einem fixen Startzeitpunkt und einem fixen Endzeitpunkt als auch in Form von Bedingungen. Ein solche Bedingung kann bspw. eine bestimmte Zeitdauer innerhalb eines größeren Zeitraums sein. Bspw. kann eine Maschine für die Dauer von acht Stunden innerhalb einer bestimmten Woche benötigt werden.

Bevorzugt enthalten die Maschinenbedarfspläne Abhängigkeiten zwischen Bedarfszeiten der Maschinen und/oder Eigenschaften der Maschinen.

Abhängigkeiten können zwischen den Bedarfszeiten verschiedener benötigter Maschinen bestehen. Bspw. können zwei Maschinen jeweils für die Dauer von acht Stunden innerhalb einer bestimmten Woche benötigt werden, beide Maschinen müssen jedoch gleichzeitig arbeiten. Auch bei nicht gleichzeitig benötigten Maschinen können Abhängigkeiten zwischen den Bedarfszeiten bestehen. So können zwei Maschinen jeweils für die Dauer von acht Stunden innerhalb einer bestimmten Woche benötigt werden, die erste Maschine muss ihre Aufgabe jedoch abgeschlossen haben bevor die zweite Maschine ihre Aufgabe erledigen kann. Eine Abhängigkeit kann auch zwischen zwei Bedarfszeiten einer Maschine bestehen. So kann eine Maschine innerhalb eines bestimmten Monats zweimal für jeweils einen Tag benötigt werden, zwischen beiden Einsätzen muss jedoch mindestens eine Woche und maximal zwei Wochen Abstand liegen.

Abhängigkeiten können auch zwischen Eigenschaften verschiedener Maschinen bestehen. Bspw. kann eine Maisernte mit einem großen Feldhäcksler oder einem kleinen Feldhäcksler durchgeführt werden. Wird dem Einsatz ein großer Feldhäcksler zugeordnet, so wird auch eine große Abfahrtskapazität benötigt. Bei einem kleinen Feldhäcksler wird nur eine kleinere Abfahrtskapazität benötigt.

Abhängigkeiten können auch zwischen Eigenschaften und Bedarfszeiten der Maschinen bestehen. Bspw. kann eine Maisernte mit einem großen Feldhäcksler oder einem kleinen Feldhäcksler durchgeführt werden. Wird dem Einsatz ein großer Feldhäcksler zugeordnet, so ist die Bedarfszeit geringer als bei einem kleineren Feldhäcksler. Entsprechend ist die Bedarfszeit des Feldhäckslers abhängig von den Eigenschaften des Feldhäckslers, hier der Leistungsfähigkeit.

Bevorzugt erstellt das Assistenzsystem die Maschinenbedarfspläne aus historischen Informationen über früher benötigte Zeiteinheiten früher zugeordneter Maschinen.

Insbesondere Bedarfszeiten von Maschinen lassen sich aus historischen Informationen über früher benötigte Zeiteinheiten früher zugeordneter Maschinen für ähnliche Aufgaben erstellen. In einer bevorzugten Ausgestaltung wird den früher benötigte Zeiteinheiten eine zusätzliche Zeitdauer hinzugefügt. Eine solche zusätzliche Zeitdauer kann Abweichungen zwischen der früheren Aufgabe und der aktuellen Aufgabe ausgleichen. Die zusätzliche Zeitdauer kann als absoluter Wert oder als prozentualer Anteil der früher benötigten Zeiteinheiten hinzugefügt werden.

In einer Ausgestaltung ist die vorbestimmte Zeiteinheit nicht länger als ein Tag, vorzugsweise nicht länger als 6 Stunden, besonders bevorzugt nicht länger als 2 Stunden.

Die vorbestimmte Zeiteinheit sollte vorzugsweise nicht wesentlich länger sein als für die kleinste vorgesehene Aufgabe benötigt wird, da die Maschine ansonsten auch für kleinste Aufgabe unnötig lange einem Betrieb zugeordnet werden. Für größere Aufgaben können die Maschinen für eine Mehrzahl von Zeiteinheiten den Betrieben zugeordnet werden.

Bevorzugt enthalten die Maschinenbedarfspläne Einsatzorte, insbesondere Anbauflächen, der Maschinen, wobei das Assistenzsystem die Überführungszeit der Maschinen von einem zugeordneten Einsatzort zum nächsten zugeordneten Einsatzort bestimmt und Zeiteinheiten für die Überführung der Maschinen vorsieht.

Durch die Angabe der Einsatzorte können die Zeiten für die Überführung der Maschinen von einem Einsatzort zum nächsten Einsatzort bei der Zuordnung berücksichtigt werden. Dies ist insbesondere bei Betrieben mit mehreren räumlich getrennten Einsatzorten sinnvoll.

In einer bevorzugten Ausgestaltung enthält die Datenbank Informationen über die auf der Vielzahl von landwirtschaftlichen Betrieben vorhandenen Maschinen und die Recheneinheit zieht die auf dem jeweiligen landwirtschaftlichen Betrieb vorhandenen Maschinen vom Maschinenbedarfsplan ab.

Bei der Erstellung des Maschinenbedarfsplans eines Betriebes wird der gesamte Maschinenbedarf bestimmt. Falls auf dem Betrieb Maschinen vorhanden sind, welche nicht von dem Assistenzsystem zugeordnet werden, so werden diese Maschinen vorrangig bei der Erfüllung des Maschinenbedarfsplans dieses Betriebes berücksichtigt. Wenn also eine vorhandene Maschine eine Bedarfsanforderung erfüllt, so wird diese Bedarfsanforderung als erfüllt angesehen und für diese Bedarfsanforderung durch das Assistenzsystem keine Maschine dem Betrieb zugeordnet.

Bevorzugt erstellt das Assistenzsystem Konfigurationsdaten für die zugeordneten Maschinen. Die erstellten Konfigurationsdaten können automatisch, insbesondere per Funk, auf die jeweilige Maschine aufgespielt werden. Alternativ können die Konfigurationsdaten dem zugeordneten Betrieb zur individuellen Nutzung übermittelt werden. Mit den automatisch erstellten Konfigurationsdaten können die Maschinen besonders einfach und schnell genutzt werden.

Die Konfigurationsdaten können bspw. Fahrspuren, Spurbreiten, Arbeitsrichtungen, Schlagumrisse, Routen zum Arbeitsort, sowie Positionen von Betriebsstoffen oder Verladestellen enthalten. Zur Erstellung der Konfigurationsdaten können diese direkt in der Datenbank hinterlegt sein. Alternativ können in der Datenbank Informationen hinterlegt sein aus denen die Recheneinheit die Konfigurationsdaten bestimmt.

In einer bevorzugten Ausgestaltung erstellt das Assistenzsystem mehrere mögliche Zuordnungen und bietet diese dem Nutzer zur Auswahl an.

Häufig können Maschinenbedarfspläne durch mehrere unterschiedliche Zuordnungen erfüllt werden. So kann eine Bodenbearbeitung durch unterschiedlich große Traktoren erfolgen. Oder der Transport von Erntegut kann durch wenige leistungsstarke Transportfahrzeuge oder viele leistungsschwache Transportfahrzeuge erfolgen. Falls mit den in der Datenbank eine Vielzahl von Zuordnungen zur Erfüllung der Maschinenbedarfspläne möglich sind, so bietet das Assistenzsystem dem Nutzer mehrere Zuordnungen zur Auswahl an. In einer Abwandlung werden dem Nutzer die Alternativen nur auf Anforderung angeboten.

Bevorzugt erstellt die Recheneinheit die Maschinenbedarfspläne aus Informationen über die Anbauflächen, wobei die Informationen über die Anbauflächen insbesondere Informationen über die Größe der Anbauflächen, das auf den jeweiligen Flächen genutzte Saatgut, den jeweiligen Standort der Anbauflächen, das erwartete Klima an den Anbauflächen und/oder Bodeneigenschaften der Anbauflächen enthalten.

Maschinenbedarfspläne können aus Informationen erstellt werden, die häufig in Farm-Management-Informations-Systemen (FMIS) bereits vorhanden sind. Durch die Nutzung dieser bereits vorhandenen Informationen wird der Nutzer des Assistenzsystems von der Aufgabe entlastet die Maschinenbedarfspläne selber zu erstellen oder die benötigten Informationen zusammen zu tragen.

Besonders bevorzugt macht das Assistenzsystem, wenn ein Maschinenbedarfsplan durch die Zuordnungen des Assistenzsystems nicht erfüllt wird, einen Vorschlag für eine andere Saatgutsorte für eine Anbaufläche.

Durch die Änderung der Saatgutsorte für eine Anbaufläche ändert sich der Maschinenbedarfsplan für diese Anbaufläche und damit für den landwirtschaftlichen Betrieb, der diese Anbaufläche bewirtschaftet. Falls es möglich ist durch eine andere Saatgutsorte einen größeren Anteil an Maschinenbedarfsplänen zu erfüllen, so schlägt das Assistenzsystem diese Änderung vor.

Besonders bevorzugt macht das Assistenzsystem, wenn ein Maschinenbedarfsplan durch die Zuordnungen des Assistenzsystems nicht erfüllt wird, einen Vorschlag für einen anderen Zeitpunkt zur Aussaat für eine Anbaufläche macht.

Durch die Änderung des Zeitpunktes der Aussaat für eine Anbaufläche ändert sich der Maschinenbedarfsplan für diese Anbaufläche und damit für den landwirtschaftlichen Betrieb, der diese Anbaufläche bewirtschaftet. Falls es möglich ist durch einen anderen Zeitpunkt für die Aussaat einen größeren Anteil an Maschinenbedarfsplänen zu erfüllen, so schlägt das Assistenzsystem diese Änderung vor.

Besonders bevorzugt macht das Assistenzsystem, wenn ein Maschinenbedarfsplan durch die Zuordnungen des Assistenzsystems nicht erfüllt wird, einen Vorschlag für eine Anschaffung einer oder mehrerer weiterer Maschinen macht.

Durch die Anschaffung einer oder mehrerer Maschinen stehen diese ebenfalls zur Erfüllung der Maschinenbedarfspläne zur Verfügung. Bevorzugt sind in der Datenbank Eigenschaften anschaffbarer Maschinen hinterlegt. Die Recheneinheit schlägt dann von den hinterlegten anschaffbaren Maschinen diejenigen vor mit denen die meisten Maschinenbedarfspläne erfüllt werden können.

Es versteht sich, dass die Vorschläge für ein anderes Saatgut, einen anderen Zeitpunkt zur Aussaat und die Anschaffung einer oder mehrerer weiterer Maschinen auch miteinander kombiniert werden können. Ebenso kann das Assistenzsystem mehrere Alternative Vorschläge machen und dem Nutzer zur Auswahl anbieten. Weiterhin können die Vorschläge mit Alternativen Zuordnungen verbunden werden.

Die Erfindung wird nachstehend anhand eines Ausführungsbeispiels näher erläutert. Die Figuren zeigen in
- Fig. 1:: ein erfindungsgemäßes Assistenzsystem,
- Fig. 2:: einen Maschinenbedarfsplan,
- Fig. 3:: einen weiteren Maschinenbedarfsplan,
- Fig. 4:: eine Karte mit landwirtschaftlichen Betrieben und Einsatzorten,
- Fig. 5:: Maschinendaten und
- Fig. 6:: eine Zuweisung.

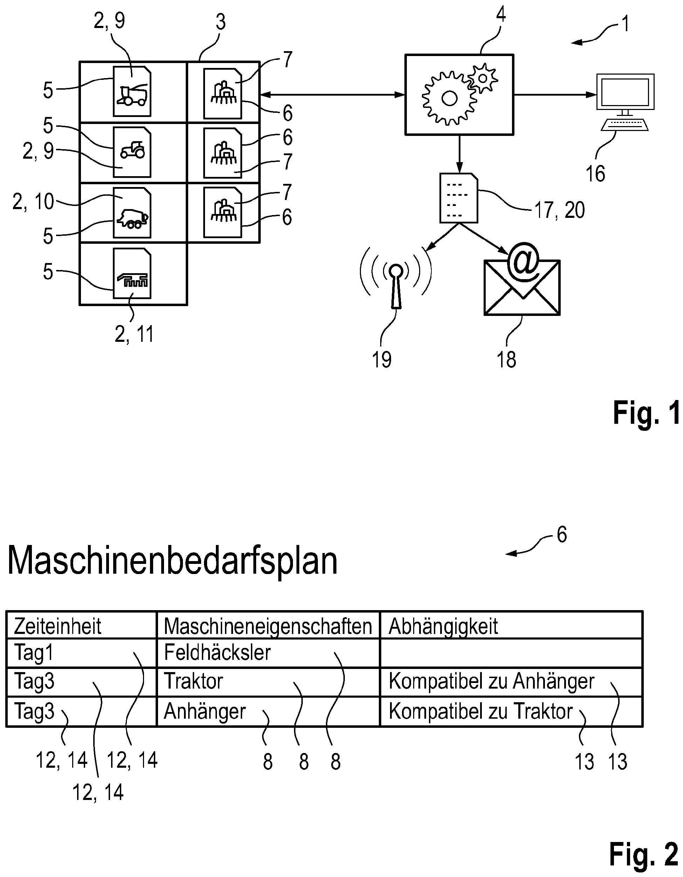

Das in Figur 1 dargestellte Assistenzsystem 1 zur Zuordnung von Maschinen 2 umfasst eine Datenbank 3 und eine Recheneinheit 4. In der Datenbank 3 sind zu den Maschinen 2 jeweils zugehörige Maschinendaten 5 hinterlegt. Ebenso sind in der Datenbank 3 Maschinenbedarfspläne 6 von landwirtschaftlichen Betrieben 7 hinterlegt. Die Recheneinheit 4 vergleicht die Maschinendaten 5 mit den Maschinenbedarfspläne 6 und ordnet die Maschinen 2 so den landwirtschaftlichen Betrieben 7 zu, dass möglichst viele, im Idealfall alle, Maschinenbedarfspläne 6 erfüllt werden. In den Maschinenbedarfsplänen 6 können die Maschinen 2 direkt oder über ihre Eigenschaften 8 bestimmt werden.

Die Maschinen 2 sind in diesem Beispiel zwei selbstfahrende Maschinen 9, hier ein Feldhäcksler und ein Traktor, eine gezogene Maschine 10 und ein Anbaugerät 11.

Die von der Recheneinheit 3 bestimmte Zuordnung der Maschinen 2 zu den Betrieben 7 kann über eine Benutzerschnittstelle 16 angezeigt werden. Ebenso kann die Zuordnung als Datei 17 ausgegeben werden. Diese Datei 17 kann bspw. als E-Mail 18 verschickt werden. Alternativ oder zusätzlich können die Zuordnungen direkt an die Maschinen 2 verschickt werden, bspw. über eine Funkschnittstelle 19.

Gemäß den Zuordnungen erzeugt die Recheneinheit 4 Konfigurationsdaten 20 für die zugeordneten Maschinen 2. Diese Konfigurationsdaten 20 können über die Benutzerschnittstelle 16 angezeigt werden. Die Konfigurationsdaten 20 können auch als als-E-Mail 18 verschickt oder direkt über die Funkschnittstelle 19 an die jeweiligen Maschinen 2 versendet werden.

In Figur 2 ist ein Beispiel eines Maschinenbedarfsplanes 6 dargestellt. In dem Maschinenbedarfsplan 6 werden für verschiedene Bedarfszeiten 12 bestimmte Maschinen 2 angefordert. Die Maschinen 2 werden in diesem Beispiel über ihre Eigenschaften 8 definiert. In diesem Beispiel wird für eine erste Bedarfszeit 12a eine Maschine mit der Eigenschaft 8 "Feldhäcksler" angefordert. Für eine zweite Bedarfszeit 12b wird eine Maschine mit der Eigenschaft 8 "Traktor" und eine Maschine mit der Eigenschaft 8 "Anhänger" angefordert. Die Zeiteinheit ist in diesem Beispiel ein Tag.

Einige der angeforderten Maschinen sind in diesem Beispiel voneinander abhängig. Der Anhänger kann nicht ohne Traktor arbeiten und der Traktor kann ohne Anhänger die geplante Aufgabe nicht ausführen. Traktor und Anhänger müssen also kompatibel sein. Diese Abhängigkeit 13 zwischen den Eigenschaften 8 der Maschinen 2 ist in dem Maschinenbedarfsplan 6 aufgeführt.

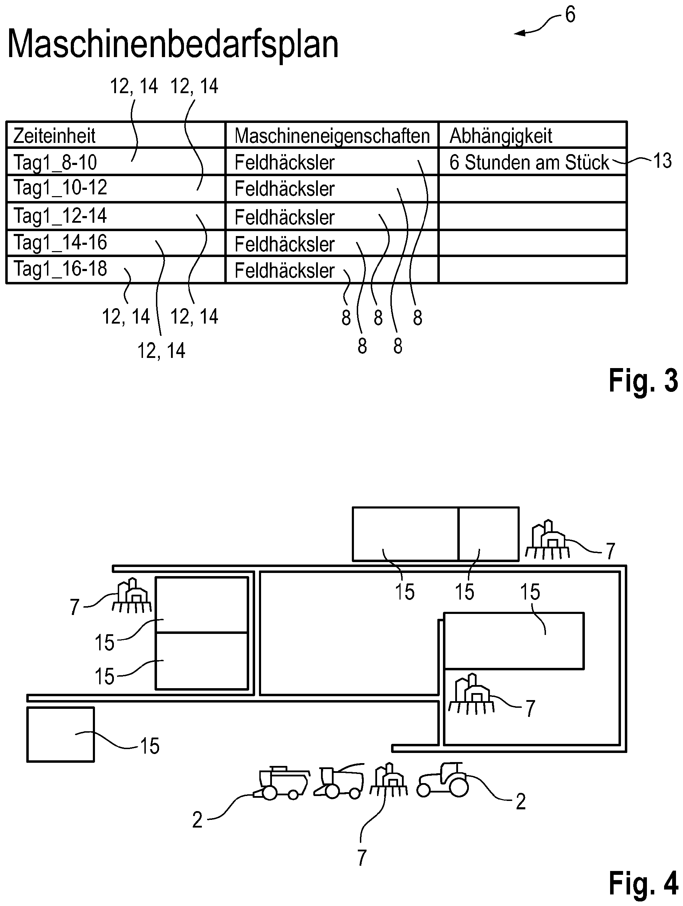

In Figur 3 ist ein weiteres Beispiel eines Maschinenbedarfsplanes 6 dargestellt. In dem Maschinenbedarfsplan 6 wird eine Maschine 2 mit der Eigenschaft "Feldhäcksler" für verschiedene Zeiteinheiten angefordert. In diesem Beispiel ist eine Zeiteinheit 14 zwei Stunden lang und die Maschine 2 wird für 3 Zeiteinheiten 14 angefordert. Die drei Zeiteinheiten 14 sollen an einander angrenzen und in einem Bereich von fünf Zeiteinheiten 14 liegen. Diese Abhängigkeit 13 der Einsatzzeiten der angeforderten Maschine 2 ist im Maschinenbedarfsplan 13 hinterlegt

In Figur 4 ist eine Karte mit landwirtschaftlichen Betrieben 7 und Einsatzorten 15 gezeigt. An einem ersten landwirtschaftlichen Betrieb 7a stehen verschiedene Maschinen 2 bereit. Diese Maschinen 2 sollen temporär anderen Betrieben 2 zugeordnet werden. Die Maschinenbedarfspläne der Betriebe 2 enthalten Einsatzorte 15 der angeforderten Maschinen 2. Da die Einsatzorte 15 teilweise nicht in direkter räumlicher Nähe zu den Betrieben 7 sind, berücksichtigt das Assistenzsystem die Zeiteinheiten, die für die Überführung der Maschinen von einem Einsatzort zum anderen benötigt werden.

Die Recheneinheit kann mit den Informationen aus der Karte und den Eigenschaften der Maschinen, wie der maximal möglichen Fahrgeschwindigkeit, die für die Überführung der Maschinen von einem Einsatzort zum nächsten bestimmen. Für die Zeiteinheiten (14), die für die Überführung der Maschine (2) benötigt wird, wird die Maschine (2) keinem Betrieb (7) zugeordnet.

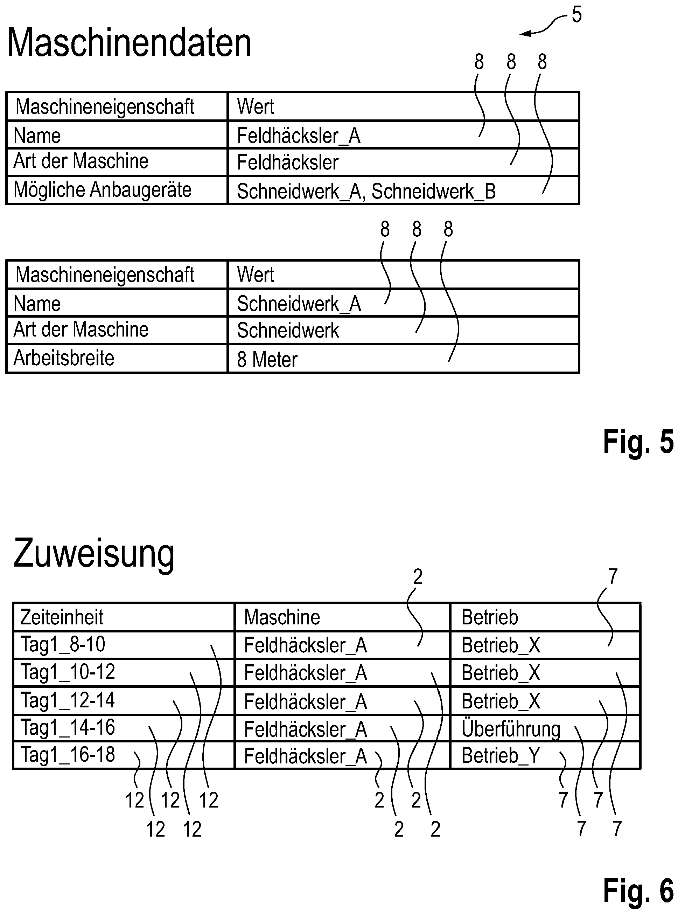

In Figur 5 sind Maschinendaten 5 sind einiger beispielhafter Maschinen gezeigt. Eine erste Maschine hat als erste Eigenschaften den Namen "Feldhäcksler_A". Als zweite Eigenschaft ist die Art der Maschine als "Feldhäcksler" angegeben. Als dritte Eigenschaft sind als mögliche Anbaugeräte "Schneidwerk_A" und "Schneidwerk_B" angegeben. Eine zweite Maschine hat als erste Eigenschaft den Namen "Schneidwerk_A". Als zweite Eigenschaft ist die Art der Maschine als "Schneidwerk" angegeben. Als dritte Eigenschaft ist die Arbeitsbreite der Maschnine mit "8 Meter" angegeben. Die in den Maschinendaten angegebenen Eigenschaften der Maschinen werden von der Recheneinheit beim Abgleich der Maschinendaten mit den Maschinenbedarfsplänen berücksichtigt.

In Figur 6 ist eine beispielhafte Zuweisung gezeigt. Die Maschine mit der Bezeichnung "Feldhäcksler_A" wird für drei Zeiteinheiten einem Betrieb mit der Bezeichnung "Betrieb_X" zugeordnet. Für eine zeiteinheit ist die Maschine einem Betrieb mit der bezeichnung "Betrieb_Y" zugeordnet. Zwischen den Zeiteinheiten mit Zuordnung der Maschine zu einem Betrieb ist eine Zeiteinheit für die Überführung der Maschine von "Betrieb_X" zu "Betrieb_Y" vorgesehen.

Die Recheneinheit 3 erzeugt für die Maschine Konfigurationsdaten und schickt diese über eine Funkschnittstelle 19 an die Maschine. Diese Konfigurationsdaten umfassen bspw. Fahrspuren an den Arbeitsorten, Fahrtrouten zu den Arbeitssorten und Positionen von Betriebsstoffen oder Verladestellen. Die Maschine ist dadurch an den Arbeitsorten schnell und einfach einsetzbar.

### Bezugszeichenliste

- 1: Assistenzsystem
- 2: Maschine
- 3: Datenbank
- 4: Recheneinheit
- 5: Maschinendaten
- 6: Maschinenbedarfspläne
- 7: Landwirtschaftlicher Betrieb
- 8: Eigenschaft
- 9: Selbstfahrende Maschine
- 10: Gezogene Maschine
- 11: Anbaugerät
- 12: Bedarfszeit
- 13: Abhängigkeit
- 14: Zeiteinheit
- 15: Einsatzort
- 16: Benutzerschnittstelle
- 17: Datei
- 18: E-Mail
- 19: Funkschnittstelle

## Patentansprüche

1. Assistenzsystem (1) zur Zuteilung von landwirtschaftlichen Maschinen (2), wobei das Assistenzsystem (2) eine Datenbank (3) und eine Recheneinheit (4) umfasst,
wobei die Datenbank (3) Maschinendaten (5) einer Vielzahl von Maschinen (2) und Maschinenbedarfspläne (6) für eine Vielzahl von landwirtschaftlichen Betrieben (7) enthält,
wobei die Recheneinheit (4) die Maschinendaten (5) mit den Maschinenbedarfsplänen (6) abgleicht,
wobei das Assistenzsystem (1) einer Mehrzahl von landwirtschaftlichen Betrieben (7) jeweils zumindest eine Maschine (2) zuordnet, sodass die Maschinendaten (5) der zugeordneten Maschinen (2) die Maschinenbedarfspläne (6) der landwirtschaftlichen Betriebe (7) erfüllen, wobei das Assistenzsystem (1) die Maschinen (2) temporär für vorbestimmte Zeiteinheiten (14) den landwirtschaftlichen Betrieben (7) zuordnet.

2. Assistenzsystem nach Anspruch 1, wobei die Maschinendaten (5) und die Maschinenbedarfspläne (6) Eigenschaften (8) der Maschinen (2), insbesondere Art der Maschine (2), Arbeitsbreite der Maschine (2) und/oder Leistungsfähigkeit der Maschine (2), umfassen, wobei die Recheneinheit (4) beim Abgleich der Maschinendaten (5) mit den Maschinenbedarfsplänen (6) die Eigenschaften der Maschinen (2) mit den in den Maschinenbedarfsplänen (6) geforderten Eigenschaften (8) abgleicht.

3. Assistenzsystem nach einem der vorhergehenden Ansprüche, wobei die Maschinen (2) selbstfahrende Maschinen (9), gezogene Maschinen (10) und/oder Anbaugeräte (11) umfassen.

4. Assistenzsystem nach einem der vorhergehenden Ansprüche, wobei die Maschinenbedarfspläne (6) Bedarfszeiten (12) der Maschinen (2) enthalten, wobei jede Bedarfszeit (12) zumindest eine vorbestimmte Zeiteinheit (14) umfasst.

5. Assistenzsystem nach einem der vorhergehenden Ansprüche, wobei die Maschinenbedarfspläne (6) Abhängigkeiten (13) zwischen Bedarfszeiten (12) der Maschinen (2) und/oder Eigenschaften (8) der Maschinen (2) enthalten.

6. Assistenzsystem nach einem der vorhergehenden Ansprüche, wobei das Assistenzsystem (1) die Maschinenbedarfspläne (6) aus historischen Informationen über früher benötigte Zeiteinheiten (14) früher zugeordneter Maschinen erstellt.

7. Assistenzsystem nach einem der vorhergehenden Ansprüche, wobei die vorbestimmte Zeiteinheit (14) nicht länger ist als ein Tag, vorzugsweise nicht länger als 6 Stunden, besonders bevorzugt nicht länger als 2 Stunden ist.

8. Assistenzsystem nach einem der vorhergehenden Ansprüche, wobei die Maschinenbedarfspläne (6) Einsatzorte (15), insbesondere Anbauflächen, der Maschinen (2) enthalten,
wobei das Assistenzsystem (1) die Überführungszeit der Maschinen (2) von einem zugeordneten Einsatzort (15) zum nächsten zugeordneten Einsatzort (15) bestimmt und Zeiteinheiten (14) für die Überführung der Maschinen (14) vorsieht.

9. Assistenzsystem nach einem der vorhergehenden Ansprüche, wobei die Datenbank (3) Informationen über die auf der Vielzahl von landwirtschaftlichen Betrieben (7) vorhandenen Maschinen (2) enthält und die Recheneinheit (4) die auf dem jeweiligen landwirtschaftlichen Betrieb (7) vorhandenen Maschinen (2) vom Maschinenbedarfsplan (6) abzieht.

10. Assistenzsystem nach einem der vorhergehenden Ansprüche, wobei das Assistenzsystem (1) Konfigurationsdaten für die zugeordneten Maschinen (2) erstellt.

11. Assistenzsystem nach einem der vorhergehenden Ansprüche, wobei das Assistenzsystem (1) mehrere mögliche Zuordnungen erstellt und diese dem Nutzer zur Auswahl anbietet.

12. Assistenzsystem nach einem der vorhergehenden Ansprüche, wobei die Recheneinheit (4) die Maschinenbedarfspläne (6) aus Informationen über die Anbauflächen (15) erstellt, wobei die Informationen über die Anbauflächen (15) insbesondere Informationen über die Größe der Anbauflächen (15), das auf den jeweiligen Anbauflächen (15) genutzte Saatgutsorte, den jeweiligen Standort der Anbauflächen (15), das erwartete Klima an den Anbauflächen (15) und/oder Bodeneigenschaften der Anbauflächen (15) enthalten.

13. Assistenzsystem nach Anspruch 12, wobei das Assistenzsystem (1), wenn ein Maschinenbedarfsplan (6) durch die Zuordnungen des Assistenzsystems (1) nicht erfüllt wird, einen Vorschlag für eine andere Saatgutsorte für eine Anbaufläche (15) macht.

14. Assistenzsystem nach Anspruch 12 oder 13, wobei das Assistenzsystem (1), wenn ein Maschinenbedarfsplan (6) durch die Zuordnungen des Assistenzsystems (15) nicht erfüllt wird, einen Vorschlag für einen anderen Zeitpunkt zur Aussaat für eine Anbaufläche (15) macht.

15. Assistenzsystem nach einem der Ansprüche 12 bis 14, wobei das Assistenzsystem (1), wenn ein Maschinenbedarfsplan (6) durch die Zuordnungen des Assistenzsystems (1) nicht erfüllt wird, einen Vorschlag für eine Anschaffung weiterer Maschinen (2) macht.

## Claims

1. An assistance system (1) for allocating agricultural machines (2), wherein the assistance system (2) comprises a database (3) and a computer unit (4),
wherein the database (3) contains machine data (5) for a plurality of machines (2) and machine requirement plans (6) for a plurality of agricultural enterprises (7),
wherein the computer unit (4) compares the machine data (5) with the machine requirement plans (6),
wherein the assistance system (1) assigns at least one respective machine (2) to a plurality of agricultural enterprises (7), so that the machine data (5) for the assigned machines (2) fulfil the machine requirement plans (6) for the agricultural enterprises (7),
wherein the assistance system (1) temporarily assigns the machines (2) to the agricultural enterprises (7) for prespecified units of time (14).

2. The assistance system according to claim 1, wherein the machine data (5) and the machine requirement plans (6) comprise properties (8) of the machines (2), in particular the type of machine (2), working width of the machine (2) and/or performance of the machine (2), wherein, when comparing the machine data (5) with the machine requirement plans (6), the computer unit (4) compares the properties of the machines (2) with the properties (8) required in the machine requirement plans (6).

3. The assistance system according to one of the preceding claims, wherein the machines (2) comprise self-propelled machines (9), drawn machines (10) and/or attachments (11).

4. The assistance system according to one of the preceding claims, wherein the machine requirement plans (6) contain required times (12) for the machines (2), wherein each required time (12) comprises at least one prespecified unit of time (14).

5. The assistance system according to one of the preceding claims, wherein the machine requirement plans (6) contain dependencies (13) between the required times (12) for the machines (2) and/or properties (8) of the machines (2).

6. The assistance system according to one of the preceding claims, wherein the assistance system (1) generates the machine requirement plans (6) from historical information regarding previously required units of time (14) for previously assigned machines.

7. The assistance system according to one of the preceding claims, wherein the prespecified unit of time (14) is no longer than one day, preferably no longer than 6 hours, particularly preferably no longer than 2 hours.

8. The assistance system according to one of the preceding claims, wherein the machine requirement plans (6) contain sites of operations (15), in particular areas under cultivation, for the machines (2),
wherein the assistance system (1) determines the transportation time for the machines (2) from one assigned site of operations (15) to the next assigned site of operations (15) and allots units of time (14) for the transportation of the machines (14).

9. The assistance system according to one of the preceding claims, wherein the database (3) contains information regarding the machines present on the plurality of agricultural enterprises (7) and the computer unit (4) removes the machines (2) present on the relevant agricultural enterprise (7) from the machine requirement plan (6).

10. The assistance system according to one of the preceding claims, wherein the assistance system (1) generates configurational data for the assigned machines (2).

11. The assistance system according to one of the preceding claims, wherein the assistance system (1) generates several possible allocations and presents them to the user for selection.

12. The assistance system according to one of the preceding claims, wherein the computer unit (4) generates the machine requirement plans (6) from information regarding the areas under cultivation (15), wherein the information regarding the areas under cultivation (15) in particular contains information regarding the size of the areas under cultivation (15), the seed variety used on the respective areas under cultivation (15), the respective location of the areas under cultivation (15), the expected climate on the areas under cultivation (15) and/or properties of the ground of the areas under cultivation (15).

13. The assistance system according to claim 12 wherein, if a machine requirement plan (6) is not fulfilled by the allocations of the assistance system (1), the assistance system (1) proposes a different seed variety for an area under cultivation (15).

14. The assistance system according to claim 12 or claim 13 wherein, if a machine requirement plan (6) is not fulfilled by the allocations of the assistance system (15), the assistance system (1) proposes a different time for sowing for an area under cultivation (15).

15. The assistance system according to one of claims 12 to 14 wherein, if a machine requirement plan (6) is not fulfilled by the allocations of the assistance system (15), the assistance system (1) proposes a procurement of further machines (2).

## Revendications

1. Système d'assistance (1) pour l'affectation de machines agricoles (2), le système d'assistance (2) comprenant une base de données (3) et une unité de calcul (4),
la base de données (3) contenant des données de machine (5) d'une pluralité de machines (2) et des plans de besoins en machines (6) pour une pluralité d'exploitations agricoles (7),
l'unité de calcul (4) comparant les données de machine (5) avec les plans de besoins en machines (6),
le système d'assistance (1) affectant respectivement au moins une machine (2) à une pluralité d'exploitations agricoles (7), de sorte que les données de machine (5) des machines (2) affectées répondent aux plans de besoins en machines (6) des exploitations agricoles (7),
le système d'assistance (1) affectant les machines (2) aux exploitations agricoles (7) de façon temporaire pendant des unités de temps (14) prédéfinies.

2. Système d'assistance selon la revendication 1, dans lequel les données de machine (5) et les plans de besoins en machines (6) comprennent des caractéristiques (8) des machines (2), notamment le type de machine (2), la largeur de travail de la machine (2) et/ou la capacité de la machine (2), sachant que lors de la comparaison des données de machine (5) avec les plans de besoins en machines (6), l'unité de calcul (4) compare les caractéristiques des machines (2) avec les caractéristiques (8) exigées dans les plans de besoins en machines (6).

3. Système d'assistance selon une des revendications précédentes, dans lequel les machines (2) sont des machines automotrices (9), des machines tractées (10) et/ou des outils attelés (11).

4. Système d'assistance selon une des revendications précédentes, dans lequel les plans de besoins en machines (6) contiennent des durées requises (12) des machines (2), chaque durée requise (12) comprenant au moins une unité de temps (14) prédéfinie.

5. Système d'assistance selon une des revendications précédentes, dans lequel les plans de besoins en machines (6) comportent des liens de dépendance (13) entre des durées requises (12) des machines (2) et/ou des caractéristiques (8) des machines (2).

6. Système d'assistance selon une des revendications précédentes, dans lequel le système d'assistance (1) établit les plans de besoins en machines (6) à partir d'informations historiques sur des unités de temps (14) antérieures requises de machines précédemment affectées.

7. Système d'assistance selon une des revendications précédentes, dans lequel l'unité de temps (14) prédéfinie n'est pas supérieure à une journée, de préférence n'est pas supérieure à 6 heures, et n'est de manière particulièrement avantageuse pas supérieure à 2 heures.

8. Système d'assistance selon une des revendications précédentes, dans lequel les plans de besoins en machines (6) contiennent des lieux d'intervention (15), notamment des surfaces cultivées, des machines (2),
le système d'assistance (1) prévoyant le temps de transfert des machines (2) depuis un lieu d'intervention (15) affecté jusqu'au lieu d'intervention (15) affecté suivant, ainsi que des unités de temps (14) pour le transfert des machines (14).

9. Système d'assistance selon une des revendications précédentes, dans lequel la base de données (3) contient des informations sur les machines (2) présentes dans la pluralité d'exploitations agricoles (7), et l'unité de calcul (4) retire du plan de besoins en machines (6) les machines (2) présentes dans l'exploitation agricole (7) respective.

10. Système d'assistance selon une des revendications précédentes, dans lequel le système d'assistance (1) établit des données de configuration pour les machines (2) affectées.

11. Système d'assistance selon une des revendications précédentes, dans lequel le système d'assistance (1) établit plusieurs affectations possibles et les propose à l'utilisateur en vue d'une sélection.

12. Système d'assistance selon une des revendications précédentes, dans lequel l'unité de calcul (4) établit les plans de besoins en machines (6) à partir d'informations sur les surfaces cultivées (15), les informations sur les surfaces cultivées (15) contenant notamment des informations sur la taille des surfaces cultivées (15), le type de semence utilisé sur les surfaces cultivées (15) respectives, l'emplacement respectif des surfaces cultivées (15), le climat attendu sur les surfaces cultivées (15) et/ou les caractéristiques du sol des surfaces cultivées (15).

13. Système d'assistance selon la revendication 12, dans lequel le système d'assistance (1) soumet une proposition pour un autre type de semence pour une surface cultivée (15), dans le cas où les affectations du système d'assistance (1) ne répondent pas à un plan de besoins en machines (6).

14. Système d'assistance selon la revendication 12 ou 13, dans lequel le système d'assistance (1) soumet une proposition pour un autre moment de semis pour une surface cultivée (15), dans le cas où les affectations du système d'assistance (15) ne répondent pas à un plan de besoins en machines (6).

15. Système d'assistance selon une des revendications 12 à 14, dans lequel le système d'assistance (1) soumet une proposition pour l'acquisition de machines (2) supplémentaires, dans le cas où les affectations du système d'assistance (1) ne répondent pas à un plan de besoins en machines (6).
